# DEMANDE DE BREVET EUROPEEN

(11) **EP 1 048 964 A1**
(43) Date de publication de la demande: **02.11.2000**
(21) Numéro de dépôt: 00109280.8
(22) Date de dépôt: 28.04.2000
(51) Int. Cl.: G02B 6/42

(54) **Assemblage d' une puce de circuit intégré optique sur une plate-forme de connexion de fibres optiques, pour former un composant optique miniature**

(30) Priorité: 28.04.1999 FR 9905587
(71) Demandeur: Highwave Optical Technologies S.A., 22302 Lannion Cedex (FR)
(72) Inventeur: Porte, Henri, Cabinet Ballot-Schmit, 83000 Toulon (FR); Labachelerie Michel, Cabinet Ballot-Schmit, 83000 Toulon (FR); Jeannot, Jean Claude, Cabinet Ballot-Schmit, 83000 Toulon (FR); Armbruster, Vincent, Cabinet Ballot-Schmit, 83000 Toulon (FR); Kaou - Larbi, Neila, Cabinet Ballot-Schmit, 83000 Toulon (FR); Mollier, Pascal, Cabinet Ballot-Schmit, 83000 Toulon (FR); Devoldere, Nicole, Cabinet Ballot-Schmit, 83000 Toulon (FR)
(74) Mandataire: Ballot, Paul Denis Jacques

(57) **Abrégé**

L'invention concerne un composant optique miniature formé par assemblage d'une puce de circuit intégré optique (1) comportant des guides d'ondes (2), sur une plate-forme (3) de connexion à des fibres optiques (5', 5''), les fibres étant positionnées et alignées dans des sillons parallèles (4', 4'') creusés dans la plate-forme.

L'invention prévoit que :
- la surface de la plate-forme (3) est creusée de microstructures femelles (30) en forme de boutonnières axiales de dimensions sub-millimétriques et en ce que,
- la face de la puce (1) comporte des microstructures mâles saillantes (10) formées par dépôt métallique, aptes à s'emboîter et à coulisser axialement dans les microstructures femelles (30), lors de l'assemblage du composant.

L'invention prévoit encore un procédé d'assemblage d'une tel composant optique miniature et un procédé de fabrication matriciel d'une plate-forme ainsi qu'un dispositif de matrice.

## Description

La présente invention concerne le domaine des circuits intégrés optiques (en anglais 〈〈 Integrated Optic Circuit 〉〉, abrégé IOC) et plus précisément les composants optiques miniatures formés par assemblage d'une puce comportant des guides d'ondes optiques et d'une plate-forme de connexion à des fibres optiques.

Les développements récents des circuits intégrés optiques permettent d'incorporer de multiples éléments optiques actifs ou passifs (réseaux, miroirs, etc.) et d'associer diverses fonctions photoniques (émetteurs, détecteurs, diodes, lasers, etc.) ou électro-optiques (modulateurs, coupleurs, etc.) dans une puce miniature qui constitue alors quasiment un mini-banc optique.

De façon générale, un circuit intégré optique est formé d'une puce qui comporte un ensemble d'éléments optiques fonctionnels reliés par des guides d'ondes optiques conduisant les signaux lumineux traités, les éléments optiques et les guides d'ondes étant implantés sur le substrat de la puce.

Diverses natures de substrat et différentes technologies d'implantation sont mises en oeuvre, selon l'état de la technique, pour développer des circuits intégrés optiques. On connaît notamment des réalisations de circuits intégrés optiques qui associent les substrats et les technologies d'implantation suivantes :
- du silicium (Si), avec dépôt de nitrure ou de silice,
- du germanium (Ge),
- de l'arseniure de gallium (AsGa), avec épitaxie,
- du phosphure d'indium (InP), avec épitaxie,
- du niobate de lithium (LiNbO₃), avec diffusion métallique,
- du verre, avec une technologie d'échange d'ions, et
- des polymères, avec insolation ou moulage de guides ;
cette liste n'étant pas limitative.

Le substrat d'une puce de circuit intégré optique peut donc être un corps semi-conducteur, notamment du silicium, ou un corps non-conducteur, les propriétés électriques n'étant pas primordiales.

L'utilisation de circuits intégrés optiques intéresse considérablement les réseaux de télécommunications par fibres optiques. Il est notamment envisagé d'incorporer des fonctions de traitement de signaux, à l'aide de circuits intégrés optiques, au niveau des lignes de communication elles-mêmes. Les circuits intégrés optiques sont ainsi appelés à remplir des fonctions de traitement en ligne, telles que des fonctions de routage, de multiplexage, de dé-multiplexage, de modulation, de commutation ou d'amplification de signaux optiques.

L'obstacle principal au développement de l'utilisation des circuits intégrés optiques est le problème de la connexion entre des fibres optiques et des guides d'ondes de circuit optique, les fibres et les guides ayant des coeurs de dimensions microscopiques et devant être parfaitement alignés pour que la transmission des signaux optiques soit effective.

Le problème consiste d'une part, à positionner très précisément les coeurs des fibres optiques dans l'alignement des axes des guides d'ondes implantés sur une puce de substrat.

Le problème consiste d'autre part, à obtenir une fixation des fibres avec les guides d'ondes, de façon fiable, stable et permanente.

La méthode manuelle consistant à amener chaque fibre microscopique en coincidence avec le guide microscopique respectif, puis à les coller, en faisant appel à des moyens de micro-positionnement mécaniques ou piézoélectriques de laboratoire, est dispendieuse et n'est pas envisageable pour une production industrielle.

Il existe des méthodes d'hybridation dans lesquelles on commence par ranger une nappe de fibres optiques dans une série de sillons parallèles creusés dans un support, de façon à prédisposer les fibres dans un plan avec un écartement déterminé de chaque fibre par rapport aux autres fibres. Par suite, on implante un circuit intégré optique sur le substrat d'une puce avec des guides d'ondes optiques tracés à la surface du bloc de substrat. Les guides d'ondes se prolongent axialement jusqu'au bord de la puce de façon à se présenter dans un plan avec le même écartement que les fibres.

Le problème revient alors à ajuster la puce par rapport au support de fibres de façon à positionner très précisément la série de guides d'ondes dans l'alignement de la nappe de fibres optiques.

La méthode commune consistant à positionner la puce à la suite du support, à aligner les guides d'ondes dans l'axe des fibres en opérant manuellement sur un banc de détection optique, puis à coller ou souder la puce avec le support, présente des inconvénients de coût, de manque de fiabilité et de reproductibilité industrielle

Un article de E. J. MURPHY intitulé 〈〈 Fiber Attachment for Guided Wave Devices 〉〉 paru en juin 1998, dans le 〈〈 Journal of Lightwave Technology 〉〉, Vol.6 n°6, décrit une technique évoluée dans laquelle il est prévu de former à la surface de la puce deux microscopiques arêtes d'alignement d'un support de fibres. Le support comprend deux plaques prenant les fibres en sandwich dans des sillons, l'une des plaques étant prolongée de sorte que la plaque et la puce se chevauchent partiellement. Les deux arêtes micrométriques de la puce s'adaptent dans deux sillons libres de fibres creusés dans la plaque de support. Les arêtes sont formées en même temps que les guides d'ondes de la puce en silicium, par gravure de la couche de passivation en silice à la surface du substrat.

Un inconvénient de cette technique est que la puce et le support ne sont pas fixés ensemble, mais simplement posés et alignés l'une sur l'autre. Il n'y a aucune tenue mécanique entre la puce et le support de fibres. De plus, les deux arêtes micrométriques n'empêchent pas un basculement du support autour de l'axe des arêtes et une perte d'alignement.

Ces méthodes et cette technique ne représentent que des solutions mécaniques partielles et non-satisfaisantes, si bien qu'elles ont été supplantées par des techniques dites de 〈〈 flip-chip 〉〉.

Les techniques connues de 〈〈 flip-chip 〉〉 consistent à superposer la puce comportant les guides d'ondes sur une plate-forme creusée de sillons axiaux dans lesquels sont disposées les fibres. La plate-forme sert donc de support des fibres et de la puce.

La plate-forme est généralement constituée de silicium, matériau cristallin permettant de creuser des sillons avec une excellente directivité, ce qui permet d'aligner parfaitement les fibres optiques et de les positionner précisément dans un plan transversal.

Les fibres sont immobilisées dans les sillons par une plaque ou contre-plaque creusée de sillons complémentaires des sillons de la plate-forme, qui vient recouvrir la nappe de fibres disposées dans les sillons de la plate-forme, de sorte que chaque fibre soit prise en sandwich au creux de deux sillons et soit maintenue en place.

Le problème est alors de reporter précisément la puce de circuit intégré optique sur la plate-forme en faisant coïncider les guides d'ondes avec les fibres optiques.

Un article de W. HUNZIKER & Al., intitulé 〈〈 Self-aligned flip-chip packaging of tilted semiconductor optical amplifier arrays on Si motherboard 〉〉, paru en mars 1995, dans la revue 〈〈 Electronics letters 〉〉, volume 31, n°6, décrit une technique de report d'une puce comportant des guides d'ondes sur une plate-forme creusée de sillons, avec un positionnement automatique, les guides venant s'encastrer dans les sillons. La fixation de la puce sur la plate-forme est obtenue par fusion de bandes de soudure intercalaires.

Un inconvénient de cette technique est que les guides subissent des contraintes mécaniques nuisibles aux transmissions de signaux optiques.

Un autre inconvénient de cette technique est qu'elle convient uniquement au cas où les guides d'ondes ont des dimensions de l'ordre de celles des sillons et des fibres, ce qui n'est généralement pas le cas, les dimensions des guides d'ondes variant selon le type de substrat.

Un article de Q. LAI et de mêmes auteurs, intitulé 〈〈 Silica on Si waveguides for self-aligned fibre array coupling using flip-chip Si V-groove technique 〉〉, paru en septembre 1996, dans la revue 〈〈Electronics Letters〉〉, Volume 32, n°20, décrit une amélioration de cette technique dans laquelle chaque guide est longé par deux arêtes latérales en relief. Chaque paire d'arêtes bordant un guide vient s'appuyer sur les deux flancs d'un sillon respectif, positionnant ainsi le guide dans l'axe du sillon et de la fibre.

Un inconvénient de ces techniques est de ne pas prévoir de fixation de la puce et de la plate-forme qui sont simplement posées l'une sur l'autre. L'un des paramètres directionnels d'alignement n'est donc pas fixé précisément.

La fixation nécessite des étapes ultérieures de collage ou de soudure qui ont pour inconvénient soit d'être irréversible, soit de porter le substrat à haute température.

Un autre inconvénient de ces techniques est de prévoir la formation d'arêtes de substrat en relief nécessitant le décapage de la quasi-totalité de la surface de la puce à l'exception des guides d'ondes, lesquels doivent être gravés en même temps, lors de la conception de la puce.

Plus généralement , l'inconvénient de ces techniques de 〈〈 flip-chip 〉〉 est de faire appel à une gravure par attaque chimique anisotrope du substrat de la puce pour former les arêtes, attaque spécifique à certains substrats cristallins qui ne convient en particulier ni au verre, ni au niobate de lithium.

L'objet de la présente invention est de concevoir un assemblage de composant optique miniature permettant un positionnement de précision micrométrique et un alignement parfait des guides d'ondes de la puce de circuit intégré optique et des fibres immobilisées sur la plate-forme, ceci sans les inconvénients précités.

Un objectif de l'invention est de prévoir que l'assemblage permet une fixation fiable, stable et permanente.

Un autre objectif de l'invention est de prévoir un procédé d'assemblage universel, s'appliquant à toute nature de substrat, verre, niobate de lithium et polymères compris, et s'adaptant à toute topographie de puce de circuit intégré optique, quelque soit la disposition des guides d'ondes, en relief ou non.

Enfin l'invention a pour objectif de réaliser des composants optiques miniatures par assemblage passif, simple, automatisable et de faible coût.

Succinctement, ces objectifs sont atteints, suivant une technique d'assemblage par 〈〈 flip-chip 〉〉, en prévoyant de former, à la surface de la puce, des plots métalliques saillants de dimensions sub-millimétriques, de préférence en forme de champignons, et de creuser, dans la plate-forme qui supporte les fibres, des ouvertures complémentaires en forme de boutonnières axiales, l'assemblage étant constitué par report de la puce sur la plate-forme en emboîtant les plots dans les ouvertures. Chaque ouverture comporte de préférence une extrémité élargie pour laisser passer la tête d'un plot en forme de champignon et une extrémité rétrécie en forme de V permettant, après coulissement axial, d'étrangler le plot en forme de champignon de façon à maintenir la puce contre la plate-forme, tout en faisant coïncider exactement l'axe des guides d'ondes de la puce avec l'axe des fibres de la plate-forme puisque chaque plot sub-millimétrique se positionne très précisément à la pointe en V de l'ouverture sub-millimétrique correspondante.

L'invention est réalisée avec un composant optique miniature destiné à traiter des signaux optiques transmis par des fibres optiques, le composant comprenant un assemblage des éléments suivants :
- une plate-forme de matière cristalline anisotrope, creusée en surface de sillons parallèles à une direction axiale, chaque sillon étant adapté pour recevoir une fibre optique, pour l'aligner dans la direction axiale et pour la positionner dans un plan transversal, et
- une puce de substrat dont une face comporte des guides d'ondes optiques,
l'assemblage étant constitué en reportant la face de la puce contre la surface de la plate-forme, avec pour particularité que :
- la surface de la plate-forme est creusée de microstructures femelles en forme de boutonnières axiales de dimensions sub-millimétriques et en ce que,
- la face de la puce comporte des microstructures mâles saillantes formées par dépôt métallique, aptes à s'emboîter et à coulisser axialement dans les microstructures femelles, lors de l'assemblage du composant.

De préférence, les microstructures femelles comportent une extrémité axiale étrécie en forme d'angle ouvert symétrique par rapport à la direction axiale.

De préférence, les microstructures femelles traversent l'épaisseur de la plate-forme.

De façon avantageuse, la plate-forme est amincie aux emplacements des microstructures femelles.

De façon avantageuse, une microstructure femelle comporte une partie de cliquet apte à bloquer une microstructure mâle.

Selon un mode de réalisation préféré de l'invention, les microstructures mâles ont une forme de champignon.

Selon le mode de réalisation préféré de l'invention les microstructures femelles comportent une partie distale large apte à laisser passer une tête de champignon de microstructure mâle, et une partie distale étroite apte à étrangler la tête de champignon.

De façon avantageuse, l'invention prévoit en outre l'assemblage de la plate-forme avec :
- au moins une plaque de matière cristalline anisotrope creusée en surface de sillons parallèles à la direction axiale, chaque sillon étant adapté pour recouvrir une fibre optique et l'immobiliser dans la position transversale, la surface de la plaque comportant des microstructures mâles formées par dépôt métallique aptes à s'emboîter et à coulisser axialement dans des microstructures femelles de la plate-forme, lors de l'assemblage du composant. De préférence, les microstructures mâles de la plaque ont une forme de champignon.

L'invention peut être réalisée partiellement avec une plate-forme de composant optique miniature, composée de matière cristalline anisotrope et comportant une surface creusée de sillons parallèles à une direction axiale, chaque sillon étant adapté pour recevoir une fibre optique, pour l'aligner dans la direction axiale et pour la positionner dans un plan transversal, la surface de la plate-forme étant apte à recevoir une puce de circuit intégré optique, avec pour particularité que la surface de la plate-forme est creusée de microstructures femelles en forme de boutonnières axiales de dimensions sub-millimétriques.

L'invention peut aussi être réalisée partiellement avec une puce de circuit intégré optique, composée de substrat et comportant des guides d'ondes optiques sur une face, la face de la puce étant apte à être reportée contre une plate-forme pour constituer un composant optique miniature, avec la particularité que la face de la puce comporte des microstructures mâles saillantes de dimensions sub-millimétriques formées par dépôt métallique.

L'invention peut encore être réalisée partiellement avec une plaque de composant optique miniature, la plaque étant composée de matière cristalline anisotrope et comportant une surface creusée de sillons parallèles à une direction axiale, chaque sillon étant adapté pour recevoir une fibre optique, pour l'aligner dans la direction axiale et pour la positionner dans un plan transversal, avec la particularité que la surface de la plaque comporte des microstructures mâles saillantes, de dimensions sub-millimétriques, formées par dépôt métallique.

Selon l'invention, il est prévu d'autre part de mettre en oeuvre un procédé d'assemblage d'un composant optique miniature destiné à traiter des signaux optiques transmis par des fibres optiques, le composant comprenant :
- une plate-forme de matière cristalline anisotrope creusée en surface de sillons parallèles à une direction axiale, chaque sillon recevant une fibre optique en l'alignant dans la direction axiale et en la positionnant dans un plan transversal, et
- une puce de substrat dont une face comporte des guides d'ondes,
l'assemblage étant constitué en reportant la face de la puce contre la surface de la plate-forme, le procédé comportant des étapes consistant à :
- creuser des microstructures femelles, en forme de boutonnières axiales, dans la surface de la plate-forme de matière cristalline anisotrope, les microstructures femelles étant de dimensions sub-millimétriques,
- effectuer un dépôt métallique pour former des microstructures mâles saillantes sur la face de la puce de substrat, et
- solidariser la puce avec la plate-forme an emboîtant les microstructures mâles dans les microstructures femelles, et an effectuant un coulissement dans la direction axiale.

De préférence, la formation des microstructures mâles comporte une étape préliminaire consistant à :
- métalliser la face de la puce de substrat. De façon avantageuse, il est prévu de :
- graver la métallisation en conservant des zones métallisées uniquement aux emplacements des microstructures mâles.

Selon un mode de procédé préféré, la formation des microstructures mâles est effectuée par électrolyse à travers des embrasures sub-millimétriques percées dans une matrice recouvrant la face de la puce.

Selon le mode de procédé préféré, l'électrolyse est prolongée pour que le dépôt métallique déborde des embrasures de la matrice.

Selon le mode de procédé préféré, la matrice est constituée d'une couche épaisse de polymère ou de résine.

Selon le mode de procédé préféré, la matrice est escamotée pour dégager les microstructures mâles.

Il est prévu que les microstructures femelles comportent une extrémité étrécie en forme d'angle ouvert symétrique par rapport à la direction axiale.

Selon un mode de procédé préféré, le creusement des microstructures femelles consiste à :
- effectuer une attaque anisotrope dans la plate-forme en matériau cristallin.

Selon un mode de procédé alternatif, le creusement des microstructures femelles consiste à :
- effectuer une attaque laser de la plate-forme.

De préférence, le creusement des microstructures femelles traverse l'épaisseur de la plate-forme.

De façon avantageuse, le creusement des microstructures femelles comporte une étape préliminaire consistant à :
- amincir l'épaisseur de la plate-forme aux emplacements des microstructures femelles.

De façon avantageuse, l'amincissement de la plate-forme et le creusement des sillons sont effectués lors d'une seule étape d'attaque chimique anisotrope.

De façon avantageuse, le creusement des sillons et le creusement des microstructures femelles sont effectués lors d'une seule étape d'attaque chimique anisotrope.

Selon l'invention, il est prévu par ailleurs de mettre en oeuvre un procédé de fabrication de plate-forme de composant optique miniature, comportant une étape consistant à :
- mouler la plate-forme sur une matrice dont la surface comporte des arêtes en relief parallèles à une direction axiale et des microstructures saillantes en forme de languettes axiales de dimensions sub-millimétriques.

Enfin, l'invention est réalisée avec un dispositif de matrice pour une fabrication de plate-forme de composant optique miniature, dans lequel une surface de la matrice comporte des arêtes en relief, parallèles à une direction axiale et des microstructures saillantes en forme de languettes axiales de dimensions sub-millimétriques.

Selon un mode de réalisation du dispositif, la matrice est composée de matière cristalline anisotrope.

Selon un autre mode réalisation du dispositif, la matrice est composée de métal, la matrice étant réalisée par empreinte métallique sur une plate-forme composée de matière cristalline anisotrope.

D'autres objectifs, caractéristiques et avantages de l'invention apparaîtront à la lecture de la description qui suit, donnée à titre d'exemple de réalisation non-limitatif, et des dessins annexés sur lesquels :
- La figure 1 représente une vue éclatée de l'assemblage d'une puce de circuit intégré optique, ainsi que de deux plaques sur une plate-forme formant un composant optique miniature selon l'invention,
- la figure 2 représente une vue en coupe axiale de l'emboîtement d'une microstructure mâle et d'une microstructure femelle de composant optique miniature selon l'invention,
- la figure 3 représente des vues de dessous de détails de réalisation de microstructure femelle de composant optique miniature selon l'invention,
- la figure 4 représente une vue de dessous de l'assemblage d'un composant optique miniature selon l'invention,
- la figure 5 représente des vues en coupe transversale de puce de composant optique miniature, au cours d'étapes de formation de microstructures mâles, saillantes, selon le procédé de l'invention,
- la figure 6 représente des vues en coupe transversale de plate-forme de composant optique miniature, au cours d'étapes de creusement de microstructures femelles, selon le procédé de l'invention, et
- la figure 7 représente une vue ou coupe transversale de l'immobilisation d'une fibre optique dans un sillon de plate-forme de composant optique miniature.

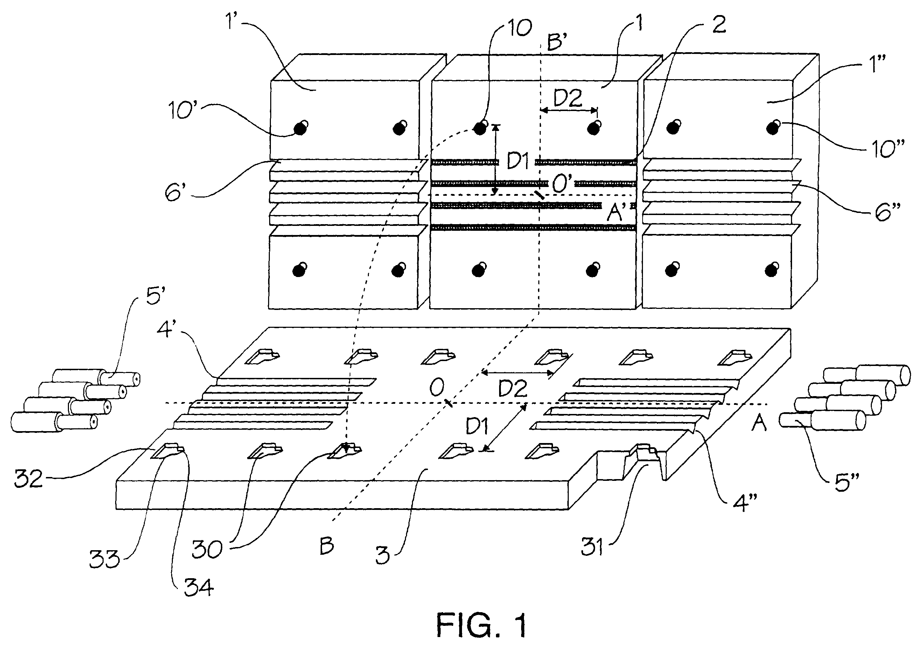

Maintenant en se reportant à la figure 1, on voit qu'un composant optique selon l'invention comprend une plate-forme 3 et une puce de circuit intégré optique 1, ainsi qu'une ou deux plaques annexes 1', 1''.

La plate-forme 3 est creusée d'une ou plusieurs séries de sillons parallèles 4' et 4'' servant à disposer des fibres optiques 5' et 5'' en les alignant dans l'axe OA des sillons et en les positionnant précisément dans un plan transversal BOB'.

Il est possible de creuser une seule série de sillons ou une série de sillons non parallèles à une autre série de sillons.

Les sillons sont de préférence creusés parallèlement à l'axe longitudinal OA de la plate-forme, deux séries de sillons 4', 4'' étant avantageusement entaillés à partir de chaque extrémité longitudinale de la plate-forme de façon à accueillir respectivement une nappe de fibres optiques d'arrivée 5' et une nappe de fibres optiques de départ 5''.

L'axe longitudinal OA constitue alors l'axe optique, c'est-à-dire l'axe de propagation des signaux optiques transmis par les fibres d'arrivée 5' puis par les fibres de sortie 5''.

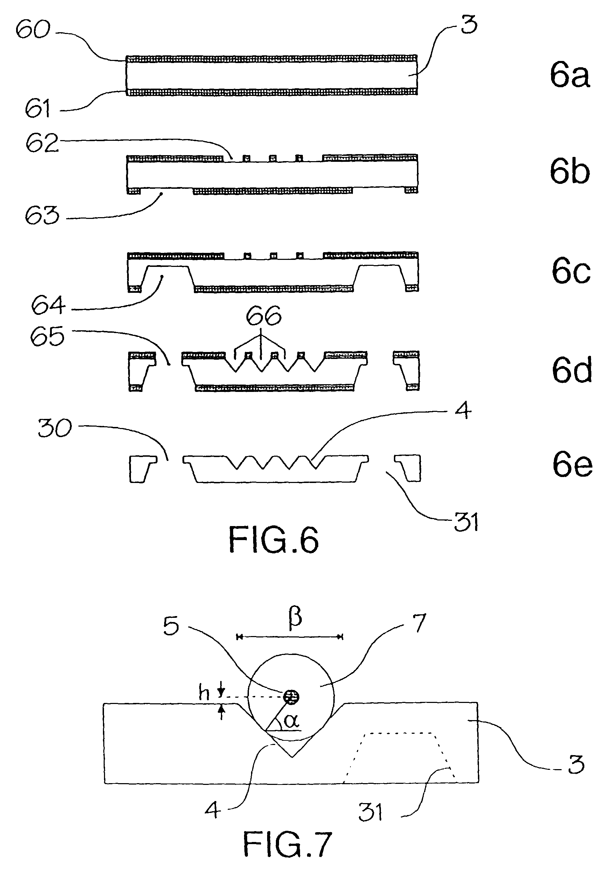

Il est avantageusement prévu de creuser les sillons par attaque chimique anisotrope, la plate-forme 3 étant constituée d'une matière cristalline anisotrope, telle que du silicium. Cette disposition a le double avantage de permettre :
- d'une part, de tracer des sillons parfaitement rectilignes, à condition que le tracé suive une direction parallèle à un axe cristallographique du matériau de la plate-forme ; et,
- d'autre part, comme le détaille la figure 7, de creuser des sillons à profil en forme de lettre V avec des flancs idéalement plans inclinés d'un angle α parfaitement déterminé par la structure cristallographique du matériau.

La forme de dièdre symétrique des sillons fournit uniquement deux lignes d'appui aux fibres de section circulaire, ce qui permet aux coeurs des fibres d'être parfaitement localisés dans l'espace. L'axe d'une fibre a ainsi un positionnement qui suit le creux du sillon.

Comme le montre la figure 7, la partie active d'une fibre optique 7 qui transporte la lumière, nommée le coeur 5, occupe un diamètre très réduit, inférieur à une dizaine de micromètres, alors que le diamètre externe de la fibre atteint l'ordre d'une centaine de micromètres (typiquement 125 µm). Le fait de creuser des sillons en V par attaque chimique anisotrope permet avantageusement de maîtriser le positionnement de la fibre 7 par rapport à la plate-forme 2, la hauteur h du centre de la fibre étant fixée avec un degré élevé de précision par le rayon de la fibre, l'angle cristallographique a et l'ouverture du sillon β.

On peut envisager, comme le suggère la figure 7, que la hauteur du centre de la fibre corresponde au rayon du coeur 5 de sorte que le coeur 5 de la fibre optique affleure la surface de la plate-forme 2.

La puce de circuit intégré optique comporte en effet des guides d'ondes implantés en relief ou qui affleurent sur la face de la puce.

Le coeur ou section active de ces guides d'ondes atteint également des dimensions inférieures à une dizaine de micromètres.

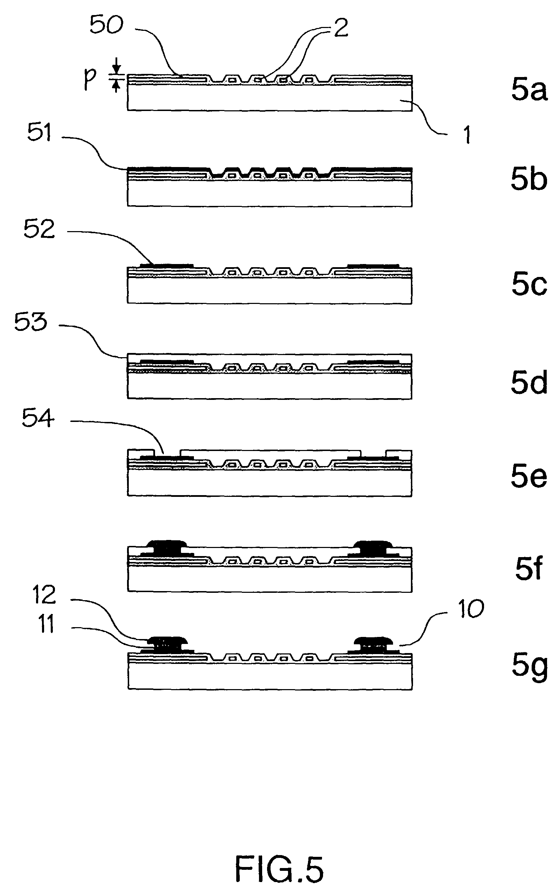

Comme indiqué sur la figure 5, vue en coupe 5a, le centre des guides d'ondes est situé à une profondeur p par rapport à la surface de gainage de ces guides, surface qui forme un plan de contact avec la plate-forme. Il est donc prévu que la hauteur h du centre des fibres par rapport à la surface de la plate-forme est égale ou avoisine la valeur de la profondeur p du centre des guides d'ondes par rapport au plan de contact.

Lorsque la face de la puce est reportée contre la surface de la plate-forme, le plan des coeurs des guides d'ondes se retrouve ainsi avantageusement en coïncidence avec le plan des coeurs des fibres.

Chaque extrémité de guide d'onde se prolonge parallèlement à l'axe optique O'A' jusqu'aux deux bords opposés de la puce. Les guides ne sont pas nécessairement rectilignes sur toute leur longueur. Il convient de soigner le clivage des guides aux bords de la puce, les extrémités devant être parfaitement perpendiculaires à l'axe optique O'A'.

Maintenant, il s'agit de positionner et de solidariser la puce contre la plate-forme en faisant coïncider parfaitement l'axe optique O'A' des guides d'ondes avec l'axe OA des sillons 4', 4'' et des fibres optiques 5', 5''.

L'invention prévoit dans ce but, de former des microstructures mâles saillantes à la surface de la puce et de creuser des microstructures femelles complémentaires dans la plate-forme. Les microstructures ont des dimensions sub-millimétriques pour permettre un positionnement de la puce par rapport à la plate-forme, de précision très supérieure au micromètre.

On peut envisager de réaliser grossièrement l'invention avec des microstructures femelles en forme de boutonnières axiales simples et des microstructures mâles en forme de simples plots cylindriques.

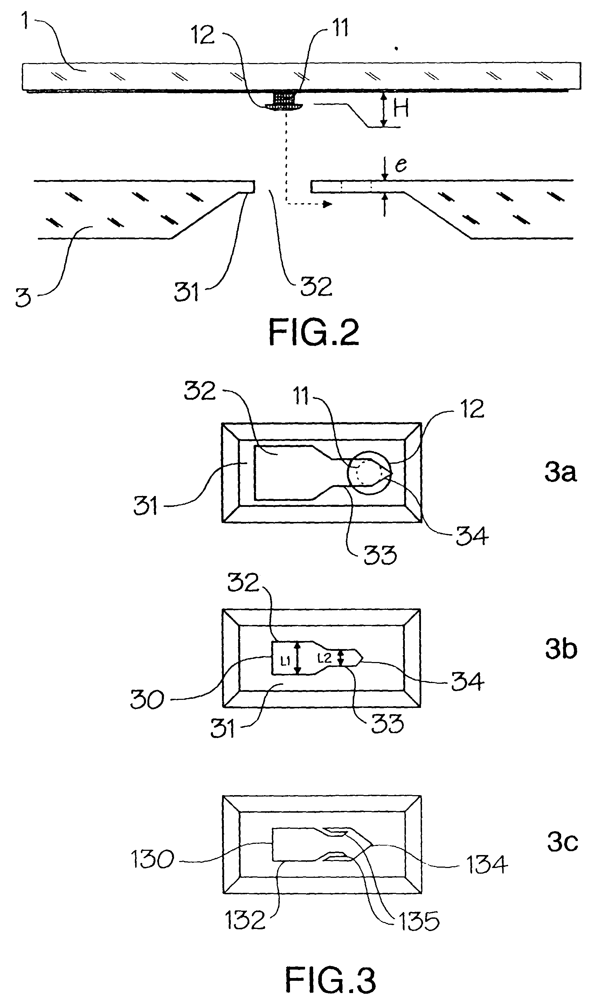

Comme indiqué par les vues de détails de la figure 3, les microstructures femelles 30 ont, de façon générale, une forme de boutonnière axiale, c'est-à-dire qu'elles forment des ouvertures dans la plate-forme qui se développent le long de l'axe longitudinal OA.

Les microstructures femelles en forme de boutonnière ont avantageusement une extrémité étrécie en forme de pointe. Ceci permet d'emboîter chaque microstructure mâle à l'autre extrémité de la boutonnière puis de faire coulisser axialement la puce contre la plate-forme jusqu'à encastrer chaque microstructure mâle dans l'extrémité étrécie de la boutonnière sans nuire à l'alignement des guides d'ondes avec les fibres puisque les guides et les fibres sont alignés axialement et que le coulissement suit la même direction.

Le fait que les boutonnières présentent une extrémité étrécie permet d'immobiliser les microstructures mâles à la pointe de ces microstructures femelles avec une précision de positionnement transversal très élevée, nettement en deçà d'un micromètre.

De préférence, les microstructures mâles comportent une base en forme de plot circulaire. A l'instar du positionnement d'une fibre circulaire dans le V d'un sillon, le plot circulaire s'appuie en deux points sur les bords symétriques en V de l'extrémité axiale d'une microstructure femelle. La position du centre du plot est donc parfaitement alignée avec l'axe de symétrie de la boutonnière axiale. De façon avantageuse, une erreur sur la valeur de diamètre du plot n'influence donc pas le positionnement transversal de la microstructure mâle par rapport à la microstructure femelle.

En outre, l'invention prévoit que les microstructures mâles 10 ont une forme de champignon. Ainsi, comme l'indique la coupe axiale de la figure 2 chaque microstructure mâle comporte une base il étroite et une tête 12 élargie, la section de la base 11 étant inférieure à la section maximale de la tête 12. En général, la forme des microstructures mâles est circulaire de révolution.

Il est prévu par conséquent, selon ce mode de réalisation préféré, que les microstructures femelles comportent une partie distale large 32 apte à laisser passer la tête de champignon d'une microstructure mâle et une autre partie distale étroite 33 apte à étrangler la tête de champignon de la microstructure mâle. La partie distale étroite 33 s'achève axialement par l'extrémité étrécie 34 qui permet un positionnement transversal très précis de la microstructure mâle.

Selon l'exemple de la figure 3b, l'ouverture d'une microstructure femelle comporte une première partie distale de largeur L1 suivie axialement d'un goulot d'étranglement symétrique vers une seconde partie distale de largeur L2 inférieure à L1. La seconde partie distale s'achève axialement par une pointe à bords symétriques en forme de lettre V.

Les dimensions, en largeur L1 et en longueur, de la partie distale large 32 sont supérieures à la section maximale, ou nommément au diamètre, de la tête 12 de champignon de la microstructure mâle.

La largeur L2 de la partie distale étroite 33 d'une microstructure femelle est légèrement supérieure, voire égale, à la largeur, ou nommément au diamètre, de la base 11 de la microstructure mâle.

Par contre, la largeur L2 de la partie distale étroite 33 est inférieure à la largeur maximale, ou nommément au diamètre, de la tête 12 de champignon de la microstructure mâle de façon à empêcher un dégagement de la tête 12 hors de l'ouverture 30 après le coulissement, ceci afin de retenir la puce bloquée et même plaquée contre la plate-forme.

De plus, comme indiqué figure 2, il est prévu que la hauteur H de la base 11 des microstructures mâles est légèrement supérieure ou à la limite égale à l'épaisseur e de la plate-forme 3, l'épaisseur e étant mesurée à l'emplacement 31 des microstructures femelles. La différence entre la hauteur H de la base des microstructures mâles et l'épaisseur e de la plate-forme permet avantageusement de préserver un léger jeu mécanique vertical entre la puce et la plate-forme.

Toutefois, la plate-forme est généralement formée dans une plaque de substrat relativement épaisse pour assurer sa solidité et sa rigidité, il est alors prévu avantageusement d'amincir la plate-forme aux emplacements 31 des microstructures femelles afin de limiter la hauteur H des microstructures mâles et de préserver leur solidité.

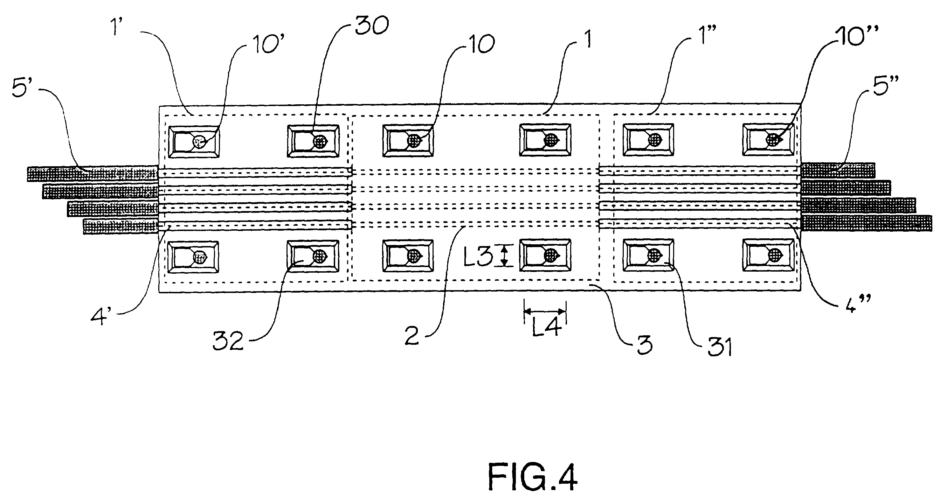

L'amincissement forme des membranes 31 de fine épaisseur e qui occupent une surface englobant l'emplacement d'une microstructure femelle. Comme l'indique la figure 4, la surface couverte par chaque membrane est de préférence de dimensions limitées, en largeur L3 et en longueur L4, afin de ne pas affaiblir la plate-forme, ni l'assemblage.

Les dimensions des microstructures d'assemblage peuvent varier dans de larges proportions de plusieurs micromètres au millimètre et appartiennent donc au domaine sub-millimétrique. La précision de gravure et de positionnement peut cependant atteindre des valeurs inférieures au micromètre. Les microstructures mâles ont de préférence des dimensions de l'ordre d'une à quelques centaines de micromètres. Les boutonnières axiales de microstructures femelles peuvent avoir une longueur de l'ordre de plusieurs centaines de micromètres à plusieurs millimètres et une largeur de l'ordre de quelques centaines de micromètres. L'épaisseur de la plate-forme est généralement de l'ordre de plusieurs dizaines à plusieurs centaines de micromètres. Vu les dimensions des microstructures mâles, l'amincissement de la plate-forme à l'emplacement des membranes réduit localement cette épaisseur à quelques dizaines de micromètres.

On peut noter par ailleurs que l'invention est réalisable grossièrement en prévoyant que les microstructures femelles forment des gorges aveugles, les microstructures femelles étant creusées dans la surface de la plate-forme sans traverser son épaisseur. On peut même prévoir des gorges concaves à profil en queue d'aronde permettant le coulissement de la tête de champignon de microstructure mâle.

Les microstructures mâles ont donc une fonction de rivet autobloquant apte à s'engager et à s'encastrer en position précise dans les ouvertures des microstructures femelles.

Selon une variante de réalisation avantageuse, illustrée sur la vue 3c, il est prévu que des microstructures femelles comportent une structure de cliquet 135.

Dans ce cas, comme illustré sur la vue 3c, il est préférable que l'ouverture de la microstructure femelle 130 traverse la plate-forme à un emplacement où l'épaisseur de la plate-forme est amincie au point de former une membrane relativement fine.

L'ouverture a une forme générale de flèche avec deux lames libres symétriques qui bordent la partie distale étrécie et qui ont assurent une fonction de cliquets anti-retour. Alternativement, l'ouverture peut être dissymétrique et comporter une seule lame latérale formant cliquet simple.

Selon l'exemple de la vue 3c de la figure 3, la forme de l'ouverture est obtenue à partir d'un masque de gravure dont l'ouverture comporte :
- une partie distale large 132 qui se rétrécie progressivement en goulot d'étranglement, vers
- une autre partie distale 134 qui présente une extrémité axiale pointue en forme de losange, et
- deux entailles 135 creusées à partir des deux sommets latéraux du losange, parallèlement et en direction des bords de la partie distale large 132.

Il reste donc après gravure une ouverture 130 étranglée dans sa partie médiane par deux lames 135 finement et souplement rattachées aux bords latéraux de l'ouverture. Ces deux lames 135 font ressort lorsque la base de la microstructure mâle coulisse axialement puis elles se relâchent et maintiennent la microstructure mâle bloquée à l'extrémité 134 de la microstructure femelle. La structure de cliquet 135 a donc une fonction de verrouillage d'un plot de microstructure mâle en position encastrée.

L'avantage de cette variante de réalisation est de bloquer axialement la puce par rapport à la plate-forme et de maintenir la puce définitivement plaquée contre la surface de la plate-forme.

On peut prévoir de limiter la proportion de microstructures femelles de la plate-forme dotées de portion de cliquet, voire de doter une seule microstructure femelle d'un cliquet, ce qui suffit à immobiliser la puce en position de coulissement.

Le nombre de microstructures mâles implantées à la surface de la puce et de microstructures femelles correspondantes doit être suffisamment élevé pour assurer la solidité de l'assemblage compte-tenu du fait que les microstructures mâles ont une section sub-millimétrique. Le nombre de microstructures mâles à la surface de la puce peut cependant être limité à trois ou quatre comme illustré figure 1, ce qui simplifie la réalisation des masques de gravure et limite les défauts d'alignement. Un minimum de trois microstructures mâles non alignées est nécessaire pour former un plan d'accrochage et éviter un effet de basculement autour d'un axe. Selon l'exemple de réalisation avantageux de la figure 1, quatre microstructures mâles sont disposées aux quatre coins de la puce ce qui assure la solidité et la rigidité de l'assemblage sans encombrer le milieu de la puce.

L'invention prévoit encore de réaliser une ou plusieurs plaques annexes 1' et 1'' destinées à la fixation des fibres. Les plaques sont constituées de matériau cristallin anisotrope, du silicium de préférence.

La surface de chaque plaque est creusée de sillons parallèles et comporte des microstructures mâles. De préférence, les sillons des plaques présentent un profil en forme de lettre V, ce qui n'est pas obligatoire du moment que les sillons de la plate-forme présentent un profil en forme de lettre V.

Les sillons d'une plaque et les sillons de la plate-forme sont complémentaires et présentent la même disposition, le même écartement. En effet, la plaque est destinée à recouvrir la nappe de fibres, chaque fibre étant ainsi immobilisée de façon permanente entre un sillon de la plaque 1' et un sillon de la plate-forme 3.

Les microstructures mâles 10' de la plaque 1' ont une forme semblable aux microstructures mâles 10 de la puce 1 et assurent l'accrochage de la plaque sur une partie d'extrémité de la plate-forme.

Des microstructures femelles 30 sont creusées dans la plate-forme en regard des microstructures mâles 10', 10'' de chaque plaque 1', 1''. Le nombre de microstructures mâles d'une plaque peut varier selon les besoins d'un minimum de deux à une multitude.

Sur la figure 1, le composant optique miniature réalisé selon l'invention comporte une plate-forme 3 sur laquelle sont reportées une puce et deux plaques puisque le composant présente une nappe de fibres d'entrée 5' à une extrémité et une nappe de fibres de sortie 5'' à l'autre extrémité.

Suivant cet exemple de réalisation, quatre microstructures mâles sont disposées aux quatre coins de chaque plaque 1', 1'', en libérant avantageusement la partie médiane de chaque plaque où sont implantés les sillons, la puce comportant aussi quatre microstructures mâles. La plate-forme comporte consécutivement douze microstructures femelles complémentaires.

L'assemblage d'un composant optique selon l'invention consiste alors à reporter la puce contre la plate-forme, à emboîter et à faire coulisser axialement les microstructures mâles dans les microstructures femelles. On dispose ensuite une série de fibres optiques d'entrée 5' dans les sillons 4' de la plate-forme. Une plaque 1' optionnelle peut alors avantageusement être reportée sur la nappe de fibres en emboîtant et en faisant coulisser les microstructures mâles dans les microstructures femelles, pour immobiliser les fibres de façon précise et permanente. On procède de façon identique, pour la disposition des fibres de sortie 5'' immobilisées de préférence par une seconde plaque 1'' à l'autre extrémité longitudinale de la plate-forme.

Alternativement les plaques 1', 1'' peuvent être omises, les fibres 5' et 5'' étant immobilisées simplement par collage.

La figure 4 montre une vue de dessous de plate-forme d'un composant optique miniature assemblé selon l'invention, lorsque les plaques et la puce de substrat sont reportées contre la plate-forme et que les microstructures mâles sont encastrées dans les microstructures femelles.

On voit que les microstructures mâles 10', 10'' et 10 des plaques 1', 1'' et de la puce 1 sont encastrées à l'extrémité axiale des microstructures femelles 30 après avoir été emboîtées dans la partie distale large 32 desdites microstructures femelles 30. Les têtes de champignon des microstructures mâles 10', 10'' et 10 plus larges que les parties distales étroites des microstructures femelles maintiennent les plaques 1', 1'' et la puce 1 solidaires de la plate-forme 3, tout en maintenant en place les fibres insérées dans les sillons de la plate-forme et des plaques.

Il apparaît sur la figure 4, que de façon avantageuse, la translation axiale des microstructures mâles et femelles n'atténue pas la transmission lumineuse entre les fibres optiques 5', 5'' et les guides d'ondes 2, car l'écartement entre l'extrémité des fibres et l'extrémité des guides peut atteindre quelques centaines de micromètres sans provoquer de pertes lumineuses significatives.

Il faut noter que la disposition des microstructures d'assemblage le long des bords longitudinaux du composant ménage avantageusement un large espace médian pour l'implantation des sillons, des fibres optiques et des guides d'ondes, tout en assurant la solidité de l'assemblage.

Un avantage de l'assemblage selon l'invention, est de permettre le montage et le démontage du composant optique miniature, ce qui permet de modifier aisément les connexions de fibres optiques, éventuellement en opérant sur place dans un réseau de télécommunications optiques.

Un autre avantage est de permettre un auto-alignement passif des fibres optiques et des guides d'ondes, sans intervention micro-mécanique.

L'avantage essentiel du système d'assemblage selon l'invention est de permettre un alignement tridimensionnel parfait d'une série de guides d'ondes et de fibres optiques.

En effet, la disposition des fibres dans les sillons creusés par gravure chimique anisotrope permet d'aligner parallèlement toutes les fibres dans le plan de la plate-forme, de connaître parfaitement la direction d'alignement et de fixer précisément leur écartement.

Les microstructures femelles sont avantageusement creusées dans la plate-forme par gravure chimique anisotrope. Ainsi, la direction d'alignement des boutonnières axiales est identique à celle des sillons. De préférence, les sillons et les microstructures femelles sont creusées au cours de la même étape de gravure chimique avec un seul masque, pour éviter toute erreur sur la position latérale D1 et axiale D2 de chaque pointe de microstructure femelle par rapport au centre O de la plate-forme et aux sillons 4', 4''.

Le fait de prévoir des microstructures mâles en forme de champignon permet de plaquer la puce contre la plate-forme et de faire correspondre exactement le plan des guides d'ondes avec le plan des fibres optiques.

Enfin, le fait d'encastrer les microstructures mâles à la pointe des microstructures femelles permet d'aligner parfaitement la direction O'A' des guides d'ondes avec la direction axiale OA des fibres optiques, de positionner latéralement très précisément l'axe des guides d'ondes par rapport à l'axe des fibres optiques et de les faire coïncider.

On obtient ainsi avantageusement un alignement tridimensionnel très précis des guides d'ondes avec les fibres optiques, ce qui permet une transmission efficace des signaux optiques.

Un autre avantage de l'invention est la simplicité et l'aspect passif de l'assemblage qui ne nécessite pas de longues manipulations d'un opérateur sur un banc de test optique.

Un autre avantage de l'assemblage est son faible coût, les étapes de réalisation des microstructures étant aisément automatisables.

L'invention porte également sur un procédé de fabrication et d'assemblage d'un tel composant optique, procédé dont les étapes vont maintenant être détaillées en regard des figures 5 et6.

Selon l'invention, les microstructures mâles sont formées par dépôt métallique à la surface de la puce.

De préférence, on procède par dépôt électrochimique de métal à travers une matrice percée d'embrasures.

Avant tout dépôt métallique, comme illustré sur la vue 5a de la figure 5, les guides d'ondes 2 sont implantés à la surface de la puce 1. La puce est par exemple réalisée dans un substrat de silicium sur lequel sont déposés des guides d'ondes en silice dopée. La surface des guides d'ondes et de l'ensemble de la puce est alors passivée par un film mince d'oxyde, tel que de la silice.

Pour faciliter l'accrochage du dépôt métallique, il est préférable d'effectuer de façon préliminaire une métallisation 51 de la surface de la puce et des guides d'ondes, comme illustré par les vues 5b et 5c.

La couche de métallisation 51 est réalisée dans un métal favorisant une croissance électrolytique, tel que l'indium, le nickel ou l'or, et présente une épaisseur très fine.

Comme illustré figure 5c, la métallisation est de préférence effectuée sur toute la surface de la puce, puis escamotée par gravure à travers un masque sauf aux emplacements des microstructures mâles. Il reste ainsi des zones 52 couvertes par une fine couche de métallisation à l'emplacement des microstructures mâles.

La gravure de la métallisation peut être effectuée par voie physique ou chimique, humide ou sèche, notamment par photogravure à l'aide d'un plasma.

Selon le procédé de l'invention, la surface de la puce est enduite d'une couche 53 épaisse plane d'un matériau polymère de forte viscosité, tel que du polyméthyl méthacrylate (en abrégé PMMA) ou de préférence une résine, notamment une résine photosensible.

L'enduction de la couche 53 de matériau visqueux peut s'effectuer par centrifugation ou par raclage sur un tour par exemple. L'épaisseur de la couche 53 correspond à la hauteur H de la base des microstructures mâles en forme de champignon.

La couche 53 de matériau polymère est en effet destinée à former une matrice d'électroformage des plots de microstructures mâles, c'est-à-dire une épaisseur de matériau percée d'embrasures traversantes formant l'empreinte en creux des plots et dans lesquelles le métal se dépose ensuite par électrolyse.

Comme illustré sur la vue 5e, la couche 53 est donc percée d'embrasures 54 verticales à l'emplacement prévu des plots de microstructures mâles.

Les embrasures 54 atteignent le fond de la couche 53 et mettent à nu les zone métallisées 52. Les embrasures 54 présentent de préférence une section circulaire ce qui est destiné à former des plots ronds.

Dans le cas d'une couche de matrice 53 constituée de PMMA, les embrasures 54 peuvent être percées par ablation laser, ce qui permet avantageusement d'obtenir des parois parfaitement verticales.

Dans le cas d'une couche de matrice 53 constituée de résine photosensible, les embrasures 54 peuvent être percées par photogravure, en exposant la résine à un rayonnement ultraviolet à travers des ouvertures d'un masque puis en éliminant la résine exposée dans un bain de développement chimique.

Il convient de prendre soin de positionner très précisément les embrasures par rapport aux guides d'ondes, notamment en se repérant par rapport à des marques O' et à des axes O'A', O'B' tracés à la surface de la puce, afin de satisfaire les conditions d'alignement avec les fibres optiques de la plate-forme.

Selon le procédé de l'invention, on effectue alors un dépôt de métal par électrolyse à travers les embrasures 54 de la matrice 53.

La puce de substrat 1 recouverte de la couche de matrice 53 est ainsi plongée dans un bain électrolytique chargé d'ions métalliques.

Le métal électrolysé se dépose alors au fond des embrasures 54 en s'accrochant avantageusement sur la métallisation 52, qui joue le rôle de germe cristallographique. Le dépôt métallique croît ensuite progressivement en comblant le vide des embrasures jusqu'à atteindre et dépasser l'épaisseur de la couche de matrice 53.

Il est prévu selon l'invention de procédé, que le dépôt métallique continue alors à croître et déborde des embrasures en se développant de façon régulière et omnidirectionnelle au-delà du périmètre des embrasures.

De façon particulièrement simple et originale, on obtient ainsi un dépôt métallique 10 en forme de champignon, c'est-à-dire présentant une base 11 cylindrique dont la section correspond à la section de l'embrasure 54 et une tête 12 de section maximale supérieure à la section de l'embrasure 54 et de forme idéalement hémisphérique.

En ce qui concerne le métal déposé pour former les structures mâles, le nickel et l'or sont préférés au cuivre, à l'argent et à l'indium pour des raisons de résistance aux contraintes mécaniques et à la corrosion.

Les métaux de la couche de métallisation 51 et du dépôt électrolytique peuvent être différents.

Enfin, la formation des microstructures mâles de la puce s'achève, comme le montre la vue 5g, par une étape consistant à éliminer la couche de matrice 53 en dégageant ainsi la base 11 des microstructures mâles 10 et toute la surface de la puce. Le matériau polymère, comme le PMMA ou la résine, qui constitue la couche 53 peut être décapé par voie chimique, de préférence.

Le procédé selon l'invention comporte encore des étapes particulières de réalisation et d'assemblage de la plate-forme, illustrées sur la figure 6.

Ces étapes font appel avantageusement à des techniques de gravure chimique anisotrope du matériau cristallin de la plate-forme, techniques qui confèrent une grande précision de positionnement puisque la gravure suit des axes de clivage cristallographique et favorise les formes triangulaires qui permettent de centrer parfaitement une fibre ou un plot circulaire malgré une erreur sur leur diamètre.

La plate-forme est formée à partir d'une tranche de matériau cristallin anisotrope débitée selon des plans de coupe cristallographique précis. Le matériau de la plate-forme est de préférence du silicium, les techniques de traitement de ce matériau cristallin étant parfaitement maîtrisées. Dans le cas du silicium, la plate-forme est découpée par exemple, parallèlement au plan cristallographique conventionnellement noté (1,0,0).

Avant le creusement des sillons et des microstructures femelles, la plate-forme 3 est recouverte, sur chacune de ses faces, par des couches de protection 60 et 61. Dans le cas du silicium, la protection peut être obtenue par oxydation thermique, ce qui forme des couches superficielles 60 et 61 en silice.

L'étape suivante, illustrée par la vue 6b, consiste à découper la couche de protection 60 de la surface supérieure de la plate-forme, suivant le gabarit d'emprise 62 des sillons.

Comme il est préférable d'amincir localement la plate-forme aux emplacements des futures microstructures femelles, il est également prévu de découper de larges ouvertures 63 dans la couche de protection 61 de la face inférieure de la plate-forme. Les ouvertures 63 correspondent et couvrent lesdits emplacements.

Aux étapes suivantes, illustrées par les vues 6b à 6d, la plate-forme subit une attaque chimique au niveau des ouvertures 63 et 62 des couches de protection, ce qui permet, en premier lieu, d'amincir la plate-forme aux emplacements des microstructures femelles et, en second lieu, de creuser des sillons 66 à la surface de la plate-forme dans la direction de l'axe longitudinal OA.

L'amincissement de la plate-forme et le creusement des sillons sont de préférence effectués en deux étapes successives, bien qu'une seule étape, consistant à plonger la plate-forme dans un bain d'attaque chimique, peut suffire.

Le creusement des sillons est réalisé par attaque chimique anisotrope. Une telle attaque donne aux sillons un tracé rectiligne, strictement parallèle à l'axe cristallographique, et un profil particulier en forme de lettre V, les flancs parfaitement plans étant inclinés suivant un angle α déterminé par la structure cristallographique, comme illustré figure 7.

Dans le cas du silicium, l'attaque chimique anisotrope s'effectue dans un bain fortement basique, par exemple un bain de soude (NaOH) ou d'hydroxyde de potassium (KOH), ce qui produit une attaque selon les plans cristallographiques conventionnellement notés (1,1,1).

La plate-forme présente ainsi des sillons parallèles 66 creusés en surface et de fines membranes 64 aux emplacements des microstructures femelles.

Selon un mode de procédé, les ouvertures 65 des microstructures femelles en forme de boutonnières axiales sont alors creusées par ablation laser, ce qui permet avantageusement d'obtenir une découpe très précise avec des flancs d'ouvertures parfaitement verticaux.

Selon un autre mode de procédé, les ouvertures 65 des microstructures femelles en forme de boutonnières axiales sont creusées par attaque anisotrope à l'aide d'un plasma à base de fluor, ce qui permet aussi avantageusement d'obtenir des flancs d'ouvertures verticaux.

Selon un mode de procédé préféré, les ouvertures 65 des microstructures femelles en forme de boutonnières axiales sont creusées en même temps que les sillons 66 au cours d'une seule étape d'attaque chimique anisotrope. Ce mode de procédé à l'avantage d'éliminer tout risque d'erreur de positionnement des ouvertures 65 par rapport aux sillons 66. Toutefois, comme les microstructures femelles 65 sont ouvertes dans des membranes d'épaisseur réduite, le défaut de verticalité des flancs des ouvertures 65 des microstructures femelles n'affecte pas la précision de positionnement des microstructures mâles, ni la tenue de l'assemblage.

Enfin, si nécessaire, le procédé de réalisation de la plate-forme s'achève par l'élimination de la ou des couches de protection pour que la plate-forme présente une surface et des arêtes de sillons nues et parfaitement planaires, comme l'illustre la vue 6e.

Un avantage du procédé est de mettre en oeuvre peu d'étapes pour réaliser une structure d'assemblage de composant optique miniature, selon l'invention.

Un autre avantage du procédé selon l'invention est de mettre en oeuvre des technologies de gravure et de dépôt métallique simples et précises, qui sont parfaitement maîtrisées à l'heure actuelle.

Un avantage essentiel du procédé selon l'invention est d'être automatisable, ce qui permet la fabrication et/ou l'assemblage de composants optiques miniatures industriellement en grandes séries.

Un avantage consécutif de l'invention est de permettre la fabrication, l'assemblage et l'installation de composants optiques miniatures à faible coût.

Enfin, une particularité essentielle et avantageuse de l'invention est de faire appel à un dépôt métallique, donc à un apport de matière, pour former les microstructures mâles à la surface de la puce, contrairement aux techniques connues de 〈〈 flip-chip 〉〉, qui prévoient une gravure de la puce, gravure nécessairement spécifique du substrat utilisé.

Consécutivement l'invention a l'avantage de s'appliquer à tout type de puce de circuit intégré optique et à toute nature de substrat, puisque le procédé d'assemblage fait appel à un dépôt métallique qui ne dépend pas de la nature du substrat, ni de la technologie d'implantation des guides d'ondes.

Ceci permet d'envisager d'appliquer le procédé d'assemblage de composant optique miniature selon l'invention, à des puces de circuits intégrés optiques fabriquées indépendamment et de concevoir une plate-forme et des plaques d'assemblage adaptables à diverses puces de circuits intégrés optiques.

Ainsi, l'avantage général du procédé et du système d'assemblage de composant optique miniature selon l'invention, est son universalité. Cet aspect offre une occasion supplémentaire de réduire le coût et d'étendre la diffusion des circuits intégrés optiques en permettant de disposer de plates-formes standards et de lignes d'assemblage universelles.

Par ailleurs, l'invention prévoit un procédé et un dispositif pour la fabrication de plate-forme de composant optique miniature, procédé destiné à faciliter la fabrication en série de plate-forme et à réduire encore le coût des composants optiques miniatures.

Le procédé de fabrication selon l'invention consiste à réaliser des plates-formes par moulage sur une matrice en relief donnant l'empreinte en creux des sillons et des microstructures femelles dans chaque plate-forme.

Le dispositif de matrice mis en oeuvre selon un tel procédé de fabrication, a donc une forme complémentaire (non illustrée) d'une plate-forme selon l'invention. La surface de la matrice comporte donc des arêtes en relief parallèles à une direction axiale et des microstructures saillantes en forme de languettes axiales. Comme l'empreinte des arêtes doit former des sillons à profil en forme de lettre V, il est prévu que les arêtes ont un profil en forme de lettre grecque Λ. De même les microstructures saillantes de la matrice ont une forme complémentaire aux boutonnières axiales exposées précédemment, avec une partie distale large, puis un étranglement progressif vers une autre partie distale étroite s'achevant axialement par une extrémité en forme de triangle isocèle.

Consécutivement, il est prévu que la matrice est réalisée dans un matériau cristallin anisotrope, tel que du silicium. Alternativement, la matrice peut être réalisée en métal en prenant l'empreinte métallique d'une plate-forme réalisée en silicium ou un autre matériau cristallin anisotrope.

Par contre, les plates-formes réalisées par moulage sur une matrice d'après le procédé de fabrication selon l'invention, peuvent être avantageusement composées de toutes sortes de matériaux fins aptes à la formation d'empreintes avec une précision micrométrique.

Ainsi, les plates-formes obtenues selon un tel procédé de fabrication ne sont pas nécessairement constituées de matériau cristallin anisotrope.

L'avantage d'un tel procédé et d'un tel dispositif de matrice est de favoriser la fabrication de plates-formes d'assemblage de composants optiques miniatures en série, à cadence de réplication élevée et à très faible coût.

D'autres étapes de procédé, modes de réalisations, variantes et améliorations de l'assemblage de composant optique miniature, pourront être mis en oeuvre par l'homme de métier sans sortir du cadre de la présente invention, l'objet de la protection étant défini par les revendications ci-après.

## Revendications

1. Composant optique miniature destiné à traiter des signaux optiques transmis par des fibres optiques, le composant comprenant un assemblage des éléments suivants :
- une plate-forme (3) de matière cristalline anisotrope, creusée en surface de sillons (4', 4'') parallèles à une direction axiale (OA), chaque sillon (4') étant adapté pour recevoir une fibre optique (5'), pour l'aligner dans la direction axiale et pour la positionner dans un plan transversal(BOB'), et
- une puce de substrat (1) dont une face comporte des guides d'ondes optiques (2),
l'assemblage étant constitué en reportant la face de la puce (1) contre la surface de la plate-forme (3), caractérisé en ce que :
- la surface de la plate-forme (3) est creusée de microstructures femelles (30) en forme de boutonnières axiales de dimensions sub-millimétriques et en ce que,
- la face de la puce (1) comporte des microstructures mâles saillantes (10) formées par dépôt métallique, aptes à s'emboîter et à coulisser axialement dans les microstructures femelles (30), lors de l'assemblage du composant.

2. Composant optique miniature selon la revendication 1, caractérisé en ce que les microstructures femelles (30) comportent une extrémité axiale étrécie (34) en forme d'angle ouvert symétrique par rapport à la direction axiale (OA).

3. Composant optique miniature selon la revendication 1 ou 2, caractérisé en ce que les microstructures femelles (30) traversent l'épaisseur (e) de la plate-forme (3).

4. Composant optique miniature selon la revendication 3, caractérisé en ce que la plate-forme est amincie (e) aux emplacements (31) des microstructures femelles (30).

5. Composant optique miniature selon la revendication 3 ou 4, caractérisé en ce qu'une microstructure femelle (130) comporte une partie de cliquet (135) apte à bloquer une microstructure mâle.

6. Composant optique miniature selon l'une des revendications 1 à 5, caractérisé en ce que les microstructures mâles (10) ont une forme de champignon (11, 12).

7. Composant optique miniature selon la revendication 6, caractérisé en ce que les microstructures femelles (30) comportent une partie distale large (32) apte à laisser passer une tête de champignon (12) de microstructure mâle (10), et une partie distale étroite (33) apte à étrangler la tête de champignon (11).

8. Composant optique miniature selon l'une des revendications 1 à 7, caractérisé en ce qu'il comprend en outre l'assemblage de la plate-forme (3) avec :
- au moins une plaque (1', 1'') de matière cristalline anisotrope creusée en surface de sillons (6', 6'') parallèles à la direction axiale (O'A'), chaque sillon (6') étant adapté pour recouvrir une fibre optique (5') et l'immobiliser dans la position transversale, la surface de la plaque comportant des microstructures mâles (10', 10'') formées par dépôt métallique aptes à s'emboîter et à coulisser axialement dans des microstructures femelles (30) de la plate-forme, lors de l'assemblage du composant.

9. Composant optique miniature selon la revendication 8, caractérisé en ce que les microstructures mâles (10') de la plaque (1') ont une forme de champignon (11, 12).

10. Plate-forme (3) de composant optique miniature, composée de matière cristalline anisotrope et comportant une surface creusée de sillons (4', 4'') parallèles à une direction axiale (OA), chaque sillon (4') étant adapté pour recevoir une fibre optique (5'), pour l'aligner dans la direction axiale (OA) et pour la positionner dans un plan transversal (BOB'), la surface de la plate-forme étant apte à recevoir une puce (1) de circuit intégré optique, caractérisé en ce que la surface de la plate-forme est creusée de microstructures femelles (30) en forme de boutonnières axiales de dimensions sub-millimétriques.

11. Plate-forme selon la revendication 10, caractérisée en ce que les microstructures femelles (30) comportent une extrémité étrécie (34) en forme d'angle ouvert symétrique par rapport à la direction axiale (OA).

12. Plate-forme selon la revendication 10 ou 11, caractérisée en ce que les microstructures femelles (30) traversent l'épaisseur (e) de la plate-forme (3).

13. Plate-forme selon la revendication 12, caractérisée en ce que la plate-forme (3) est amincie (e) aux emplacements (31) des microstructures femelles (30).

14. Plate-forme selon la revendication 12 ou 13, caractérisée en ce qu'une microstructure femelle (130) comporte une partie de cliquet (135).

15. Plate-forme selon l'une des revendications 10 à 14, caractérisée en ce que les microstructures femelles (30) comportent une partie distale large (32) et une partie distale étroite (33).

16. Puce (1) de circuit intégré optique, composée de substrat et comportant des guides d'ondes optiques (2) sur une face, la face de la puce étant apte à être reportée contre une plate-forme (3) pour constituer un composant optique miniature, caractérisée en ce que la face de la puce comporte des microstructures mâles saillantes (10) de dimensions sub-millimétriques formées par dépôt métallique.

17. Puce selon la revendication 16, caractérisée en ce que les microstructures mâles (10) ont une forme de champignon (11, 12).

18. Plaque (1', 1'') de composant optique miniature, la plaque étant composée de matière cristalline anisotrope et comportant une surface creusée de sillons (6', 6'') parallèles à une direction axiale (O'A'), chaque sillon (6') étant adapté pour recevoir une fibre optique (5'), pour l'aligner dans la direction axiale (O'A')et pour la positionner dans un plan transversal (B'O'B), caractérisé en ce que la surface de la plaque comporte des microstructures mâles saillantes (10'), de dimensions sub-millimétriques, formées par dépôt métallique.

19. Plaque (1', 1'') selon la revendication 18, caractérisé en ce que les microstructures mâles (10', 10'') ont une forme de champignon (11, 12).

20. Procédé d'assemblage d'un composant optique miniature destiné à traiter des signaux optiques transmis par des fibres optiques, le composant comprenant :
- une plate-forme (3) de matière cristalline anisotrope creusée en surface de sillons (4', 4'') parallèles à une direction axiale, chaque sillon (4') recevant une fibre optique (5') en l'alignant dans la direction axiale (OA) et en la positionnant dans un plan transversal (BOB'), et
- une puce (1) de substrat dont une face comporte des guides d'ondes (2),
l'assemblage étant constitué en reportant la face de la puce contre la surface de la plate-forme, le procédé étant caractérisé par des étapes consistant à :
- creuser des microstructures femelles (30), en forme de boutonnières axiales, dans la surface de la plate-forme de matière cristalline anisotrope, les microstructures femelles étant de dimensions sub-millimétriques,
- effectuer un dépôt métallique (11, 12) pour former des microstructures mâles saillantes (10) sur la face de la puce de substrat, et
- solidariser la puce avec la plate-forme en emboîtant les microstructures mâles (10) dans les microstructures femelles (30), et en effectuant un coulissement dans la direction axiale (OA).

21. Procédé selon la revendication 20, caractérisé en ce que la formation des microstructures mâles (10)comporte une étape préliminaire consistant à :
- métalliser (51) la face de la puce de substrat (1).

22. Procédé selon la revendication 21 caractérisé par une étape consistant à :
- graver la métallisation (51) en conservant des zones métallisées (52) uniquement aux emplacements des microstructures mâles (10).

23. Procédé selon l'une des revendications 20 à 22, caractérisé en ce que le dépôt métallique formant les microstructures mâles (10) est effectué par électrolyse à travers des embrasures (54) sub-millimétriques percées dans une matrice (53) recouvrant la face de la puce (1).

24. Procédé selon la revendication 23, caractérisé en ce que l'électrolyse est prolongée pour que le dépôt métallique déborde (11, 12) des embrasures (54) de la matrice (53).

25. Procédé selon la revendication 23 ou 24, caractérisé en ce que la matrice (53) est constituée d'une couche épaisse de polymère ou de résine.

26. Procédé selon l'une des revendications 23 à 25, caractérisé en ce que la matrice (53) est escamotée pour dégager les microstructures mâles (10).

27. Procédé selon l'une des revendications 20 à 26, caractérisé en ce que les microsuructures femelles (30) comportent une extrémité étrécie (34) en forme d'angle ouvert symétrique par rapport à la direction axiale (OA).

28. Procédé selon l'une des revendications 20 à 27, caractérisé en ce que le creusement (65) des microstructures femelles (30) consiste à :
- effectuer une attaque anisotrope dans la plate-forme (3) en matériau cristallin.

29. Procédé selon l'une des revendications 20 à 27, caractérisé en ce que le creusement (65) des microstructures femelles (30) consiste à :
- effectuer une attaque laser de la plate-forme (3).

30. Procédé selon l'une des revendications 20 à 29, caractérisé en ce que le creusement (65) des microstructures femelles (30) traverse l'épaisseur de la plate-forme (3).

31. Procédé selon la revendication 30 caractérisé en ce que le creusement des microstructures femelles (30) comporte une étape préliminaire consistant à :
- amincir (64) l'épaisseur de la plate-forme (3) aux emplacements (31) des microstructures femelles (30).

32. Procédé selon la revendication 31, caractérisé en ce que l'amincissement (64) de la plate-forme (3) et le creusement (66) des sillons (4) sont effectués lors d'une seule étape d'attaque chimique anisotrope.

33. Procédé selon l'une des revendications 20 à 32, caractérisé en ce que le creusement (66) des sillons (4) et le creusement (65) des microstructures femelles (30) sont effectués lors d'une seule étape d'attaque chimique anisotrope.

34. Procédé de fabrication de plate-forme de composant optique miniature, caractérisé en ce qu'il comporte une étape consistant à :
- mouler la plate-forme sur une matrice dont la surface comporte des arêtes en relief parallèles à une direction axiale et des microstructures saillantes en forme de languettes axiales de dimensions sub-millimétriques.

35. Dispositif de matrice pour une fabrication de plate-forme de composant optique miniature, caractérisé en ce qu'une surface de la matrice comporte des arêtes en relief, parallèles à une direction axiale et des microstructures saillantes en forme de languettes axiales de dimensions sub-millimétriques.

36. Dispositif de matrice selon la revendication 35, caractérisé en ce que les microstructures saillantes comportent une extrémité pointue en forme de triangle isocèle.

37. Dispositif de matrice selon la revendication 35 ou 36, caractérisé en ce que les microstructures saillantes comportent une partie distale large et une partie distale étroite.

38. Dispositif de matrice selon l'une des revendications 35 à 37, caractérisé en ce que la matrice est composée de matière cristalline anisotrope.

39. Dispositif de matrice selon l'une des revendications 35 à 37, caractérisé en ce que la matrice est composée de métal, la matrice étant réalisée par empreinte métallique sur une plate-forme composée de matière cristalline anisotrope.
